# EUROPEAN PATENT SPECIFICATION

(11) **EP 4 209 532 B1**
(45) Date of publication and mention of the grant of the patent: **09.09.2026**
(21) Application number: 22150977.1
(22) Date of filing: 11.01.2022
(51) Int. Cl.: C08G 65/24, C08G 65/26, C08G 65/336, C09J 171/02

(54) **SILYL TERMINATED POLYETHER**
SILYLTERMINIERTER POLYETHER
POLYÉTHER À TERMINAISON SILYLE

(43) Date of publication of application: 12.07.2023
(73) Proprietor: Kaneka Belgium N.V., 2260 Westerlo-Oevel (BE); Vito, 2400 Mol (BE)
(72) Inventor: HARUMASHI, Tatsuro, B-2260 Westerlo-Oevel (BE); PEETERS, Luc, B-2260 Westerlo-Oevel (BE); MARIËN, Hanne, B-2260 Westerlo-Oevel (BE); ISNARD, Florence, B-2400 Mol (BE); RUBENS, Maarten, B-2400 Mol (BE); VENDAMME, Richard, B-2400 Mol (BE)
(74) Representative: V.O.

(56) References cited:
- CA-A1- 2 913 978
- DE-A1- 102013 216 751
- US-A1- 2017 283 554

## Description

The present invention relates to novel silyl terminated polyethers having a specific additional building block incorporated into the polymer backbone, to a process for preparing said novel silyl terminated polyethers, to curable compositions containing said silyl terminated polyether and to potential applications of said curable compositions mainly as adhesives and coating agents.

Silyl terminated polyethers are a special class of polymers which have as an end group of the long middle polyether section of the polymer, also referred to as a terminating group, a silyl type molecule. The reactive silyl group is crosslinked by the formation of a siloxane bond, which is accompanied by hydrolysis due to moisture even at room temperature, to give a rubbery cured product. Silyl terminated polyethers are main components in solvent-free sealant and adhesive products. These products are typically isocyanate free. Sealant products manufactured with silyl terminated polyethers have good characteristics, such as adhesion on a wide range of substrate materials, and have good temperature and UV (ultraviolet) resistance. This makes these products applicable in a wide range of applications, such as in building and construction, industry, transportation, flooring, waterproofing, DIY and many others.

The silyl terminated polyethers can be formed using relatively simple chemistry techniques. On application the products cure from a liquid or gel state to a solid. Curing entails cross-linking by the hydrolysis of silyl esters. Cross-linking improves certain characteristics of the final material.

A specific type of such silyl terminated polyethers is known as Kaneka's MS Polymer^{™}. As a middle section it contains a functionalized polyether backbone with methoxysilyl terminal groups. It provides excellent performances and makes MS Polymer-based products unique and beneficial for various applications mainly as sealant or adhesive in varying areas such as construction, industry, consumer and specialties. Examples of main applications include construction sealant, flooring adhesive, waterproofing and roof applications, industrial transportation, windscreen adhesive. MS Polymers provide environmentally friendly alternatives to existing technologies in that no solvents are required, they are isocyanate-free, and also PVC-, silicone- and detergent-free and provide very low emissions. MS Polymers provide easy and robust processing and such versatile properties as self-levelling and thixotropic, application by spray, extrusion, notched spatual or brush, tunable curing properties, primerless adhesion to many different substrates, outstanding weather resistance, high strength adhesives and low modulus sealants. A broad range of MS Polymer grades is available. These may differentiate in degree of functionalization (number and nature of groups attached to the backbone) (mono or bifunctional) and backbone structure in a wide viscosity range. Typically a dimethoxymethylsilyl terminated polyether or trimethoxysilyl terminated polyether is used. US 2017/283554 A1 teaches a process for producing hydrosilylatable, eugenol-based polyethers, the conversion thereof into polyether siloxanes and also the products that may be produced by this process and the use of said products as surfactants.

Good mechanical properties and good adhesion to various substrates is required for a lot of the applications in which silyl terminated polyethers are currently used.

Therefore there continues to exist a need to improve mechanical and physical properties and adhesive properties of cured products derived from silyl terminated polyethers.

Accordingly the present invention provides a polyether having at least one reactive silyl group, preferably reactive terminal silyl group and having incorporated within its polyether backbone co-polymerised epoxidized o-, m- or p-methoxyphenol monomers or derivatives thereof wherein the o-, m-, or p-methoxyphenol or derivative thereof is epoxidized prior to being incorporated into the polyether backbone.

By incorporating by co-polymerisation said epoxidized o-, m- or p-methoxyphenol monomers into the polyether backbone the mechanical and physical properties of cured products based on said silyl (terminated) polyethers improves compared to cured products derived from silyl (terminated) polyethers not comprising such epoxidized o-, m- or p-methoxyphenol monomers. In particular higher tensile strength and/or higher tear strength is obtained. Also the adhesive properties of said cured products are generally improved with respect to various substrates, in particular plastics such as polyvinylchloride. For some cured products, in particular those having co-polymerised epoxidized eugenol within the polyether backbone also the heat stability is improved.

According to the invention any one of o-, m- or p-methoxyphenol or a mixture of two or more of them can be used to incorporate into the silyl (terminated) polyether but most preferred o-methoxyphenol, also known as guaicacol is used.

Derivatives of o-, m- or p-methoxyphenol can also be used, in particular compounds having further substituents on the benzene ring, such as alkyl groups or alkenyl groups, such groups preferably having 2 to 10 carbon atoms. Examples of such derivatives of o-, m- or p-methoxyphenol include propyl guaiacol and eugenol (4-allylguaiacol).

The o-, m- or p-methoxyphenol or derivative thereof is epoxidized prior to being incorporated into the polyether backbone. Such an epoxidation process typically involves the steps of a) reacting the o-, m- or p-methoxyphenol or derivative thereof with epichlorohydrin in the presence of a catalyst at elevated temperature, b) continue stirring the reaction mixture for a prolonged time, c) cool down the reaction mixture, d) remove excess epichlorohydrin, and e) extracting the reaction mixture so as to obtain epoxidized o-, m- or p-methoxyphenol or derivative thereof.

According to the invention, in general the amount of epoxidized o-, m- or p-methoxyphenol or derivative incorporated within the polyether backbone of the silyl (terminated) polyether is at least 1 % by weight based on the total polymer, preferably between 2 and 50 % by weight, more preferably between 3 and 30 % by weight and most preferably between 10 and 15 % by weight.

The polyether containing at least one reactive silyl group of the present invention has as main skeleton a polyether polymer. As used herein the term "polyether/polyethers" designates a polyoxyalkylene group. Such a group may be represented by the formula (CₘH₂ₘO)_{y} wherein m is from 2 to 4 inclusive and y is greater than 4 and may generally range from 5 to 1000 .The polyoxyalkyene group may comprise oxyethylene units (C₂H₄O), oxypropylene units (C₃H₆O), oxybutylene units (C₄H₈O), oxytetramethylene units or mixtures thereof. The main structure may be composed of only one kind of repeating oxyalkylene units or two or more kinds of repeating units. When mixtures are present (such as polyoxyethylene-polyoxypropylene copolymer) typically they are in the form of a random copolymer. According to a preferred embodiment of the present invention the polyether chain is a polyoxypropylene chain. The main chain structure of the polyether may be linear or may be branched. When the polymer has branched chains, the branched chain number is preferably 1 to 4, most preferably 1.

In some embodiments of the invention, the backbone skeleton of the reactive silyl-group containing polyether may contain other components such as a urethane bond component as long as the effect of the present invention is not significantly impaired. The urethane bond component is not particularly limited and examples thereof include groups (hereinafter also referred as amido segments) formed by reaction between an isocyanate group and an active hydrogen group. Such amido segments can be represented by the formula (1): -NR¹-C(=O)- wherein R¹ is an organic group having 1 to 10 carbon atoms or a hydrogen atom. The aforementioned segment specifically includes a urethane group produced by reaction of an isocyanate group and a hydroxyl group, or an amino group and carbonate; a urea group produced by reaction of an isocyanate group and an amino group; a thiourethane group produced by a reaction of an isocyanate group and a mercapto group and the like. Moreover a group produced by a further reaction of active hydrogen in the abovementioned urethane group, urea group and thioureagroup, and an isocyanate group is also encompassed in the group of formula (1). When the main chain of the polyether contains an amido segment, the number on average of the amido segment per molecule is preferably 1 to10, more preferably 1.5 to 5, particularly preferably 2 to 3.

The reactive silyl group of the polyether as used herein is a silicon-containing group having a hydroxyl group or a hydrolysable group bonded to a silicon atom and capable of forming a siloxane bond. The reactive silyl group is preferably represented by the formula (2):

- SiR²ₐY₃₋ₐ

wherein R² is a substituted or unsubstituted hydrocarbon group having 1 to 20 carbon atoms, each Y is independently a hydroxyl group or a hydrolysable group and a is 0 or 1. A reactive silyl group represented by formula (2) is a group crosslinkable by forming a siloxane bond by a reaction accelerated by a catalyst for silanol condensation. Examples of R² in the formula (2) include alkyl groups, such as methyl group, ethyl group and the like; cycloalkyl groups such as cyclohexyl group and the like; aryl groups such as phenyl group and the like; aralkyl groups such as benzyl group and the like; a triorganosiloxy group represented by -OSi(R')₃ wherein R' is methyl group, phenyl group and the like; fluoroalkyl groups such as fluoromethyl group, difluoromethyl group and the like; chloroalkyl groups such as chloromethyl group, 1-chloroethyl group and the like; alkoxyalkyl groups such as methoxymethyl group, ethoxymethyl group, phenoxymethyl group, 1-methoxyethyl group and the like; aminoalkyl groups such as aminomethyl group, N-methylaminomethyl group, N,N-dimethylaminomethyl group and the like; acetoxymethyl group, methylcarbamate group, 2-cyanoethyl group and the like. Of these, alkyl group is preferably, and methyl group is particularly preferable. As hydrolyzable group for Y in the formula (2), a known hydrolysable group can be mentioned. Examples of the hydrolysable group include a hydrogen, a halogen, an alkoxy group, an alkenyloxy group, an aryloxy group, an acyloxy group, a ketoxymate group, an amino group, an amido group, an acid amido group, an aminooxy group, a mercapto group and the like. Of these, a halogen, an alkoxy group, an alkyloxy group, and an acyloxy group are preferable with an alkoxy group as more preferable and a methoxy and an ethoxy group as particularly preferable. As the substituted or unsubstituted hydrocarbon group having 1 to 20 carbon atoms for R² in the formula (2), an alkyl group having 1 to 10 carbon atoms, an aryl group having 6 to 10 carbon atoms or an aralkyl group having 7 to 10 carbon atoms is preferable, and these may be bonded to halogen atom, nitro group, amino group, cyano group or hydroxyl group as a substituent. As a reactive silyl group represented by the formula (2), trimethoxysilyl group, triethoxysilyl group, tris(2-propenyloxy) silyl group, triacetosilyl group, dimethoxymethylsilyl group, diethoxymethylsilyl group, diisopropoxymethylsilyl group, (chloromethyl)dimethoxysilyl group, (methoxymethyl)dimethoxysilyl group, (methoxymethyl)diethoxysilyl group, and (ethoxymethyl)dimethoxysilyl group are specifically preferable. Of these dimethoxymethylsilyl group, trimethoxysilyl group and triethoxysilyl are particularly preferable.

The polyethers according to the invention may have only one reactive silyl group or more than one. The average number of the reactive silyl groups per molecule of polyether is generally however not more than 6, preferably not more than 5. Preferably the average number of reactive silyl groups contained in the polyether is 1 to 4, more preferably 1.1 to 3, still more preferably 1.3 to 2.5 and particularly preferably 1.5 to 2.3 per molecule. The location of the reactive silyl group(s) in the polyether chain is not limited but preferably the reactive silyl groups are located at terminal moieties of the main chain polyether structure.

The number average molecular weight of the polyether containing at least one reactive silyl group is preferably not less than 2000, preferably not less than 8000. It is preferably not more than 60000, more preferably not more than 50000.

Further detailed descriptions of polyethers containing at least one reactive silyl group and ways to prepare them are provided in US 10150895 and EP 2684690.

The process for preparing the polyether of the present invention having at least one reactive silyl group and incorporated within its polyether backbone co-polymerised epoxidized o-, m- or p-methoxyphenol or derivative thereof generally comprises the following steps:
a) ring-opening polymerization of a cyclic ether compound in the presence of an initiator using a polymerization catalyst to prepare a polyoxyalkylene polymer having terminal hydroxyl groups,
b) converting the terminal hydroxyl groups of the compound obtained in step a) to carbon-carbon unsaturated bonds, and
c) hydrosilation of the compound obtained in step b),
wherein the cyclic ether compound used in step a) comprises epoxidized o-, m- or p-methoxyphenol or derivative thereof.

Examples of the cyclic ether compound include ethylene oxide, propylene oxide, butylene oxide and tetrahydrofuran. These cyclic ether compounds may be used alone or in any combination of two or more thereof. It is preferred to use in particular propylene oxide.

Specific examples of the initiator include alcohols such as ethylene glycol, propylene glycol, butanediol, hexamethylene glycol, neopentyl glycol, diethylene glycol, dipropylene glycol, triethylene glycol, glycerin, trimethyolmethane, trimethyolpropane, pentaerythritol, and sorbitol; and polyoxyalkylene polymers each having a number-average molecular weight of 300 to 4000, such as polyoxypropylene diol, polyoxypropylene triol, polyoxyethylene diol and polyoxyethylene triol.

Random or block copolymers of the epoxidized o-, m- or p-methoxyphenol or derivative can be prepared and are the subject-matter of the present invention.

The present invention also provides a curable composition comprising the silyl (terminated) polyether with additional building blocks of epoxidized o-, m- or p-methoxyphenol or derivative thereof. Such a curable composition may further contain various additives, functional substances known per se.

Suitable additives can be selected from catalysts, rheology control agents such as thixotropic agents (e.g. polyamide waxes, fumed silica), pigments (e.g. TiO₂, carbon black), anti-oxidants, UV and light stabilizers (e.g. hindered phenol antioxidants), adhesion promotors (e.g. amino/epoxysilanes), plasticizers (e.g. phthalates, PPG), dihydrogen agents, fillers (e.g. talc, fumed silica, silica, calcium carbonate), moisture scavengers, flame retardants, blowing agents or defoamers, deaerating agents, film-forming polymers, antimicrobial and preservative compounds, anti-freeze agents, fungicides, spraying aids, wetting agents.

The curable composition of the present invention is prepared by simply mixing the ingredients at room temperature.

Cured products derived from the polyether of the present invention and/or the curable composition of the present invention find application as binder, coating, sealant or adhesive, or any other application for which silyl terminated polyethers are generally used.

Said cured products show improved strength, in particular tensile strength and/or tear strength and elongation at break compared to cured products based on silyl (terminated) polyethers of the prior art. Improvements in elongation at break of more than 50 % can in general be obtained depending on the actual composition. Cured products derived from silyl (terminated) polyethers having incorporated within its polyether backbone co-polymerised epoxidized eugenol monomer on general do not show an improvement in elongation at break. Further said cured products according to the invention generally provide improved adhesion to various substrates in particular plastic substrates such as PVC and acrylonitrilebutadiene-styrene. Some cured products according to the invention in particular those derived from silyl (terminated) polyethers having incorporated within its polyether backbone co-polymerised epoxidized eugenol monomer also show improved heat stability.

The invention is illustrated but not limited by the following examples.

### Example 1: Preparation of Epoxydized Guaiacol monomer (EPG)

1.0 equivalent of propyl guaiacol (from Sigma Aldrich) was charged into a round-bottomed flask. 0.3 equivalent of Triethylbenzylammonium chloride (TEBAC, from Sigma Aldrich) and 1.5 equivalent of Epichlorohydrin (from Sigma Aldrich) were added and the mixture was stirred for 3 hours at 90 °C. The solution was cooled down to room temperature and excess amount of epichlorohydrin was evaporated at 55 °C under reduced pressure. An aqueous solution of NaOH (1.1 eq., 15 wt%) was added and the mixture was vigorously hand-shaken and stirred for 30 minutes at 30 °C. Ethyl acetate and deionized water were then added. The mixture was extracted thrice with ethyl acetate. Organic layers were combined, rinsed thrice with brine and dried on anhydrous Na₂SO₄. Ethyl acetate was removed using a rotary evaporator. Chromatographic column on silica gel with a mixture of cyclohexane/ethyl acetate (95/5 to 9/1) gave EPG as a white crystalline product (purity by ¹H NMR of 97%).

¹H NMR (400 MHz, CDCl₃) δ 6.84 (d, J = 8.1 Hz, 1H), 6.71 (d, J = 2.0 Hz, 1H), 6.68 (dd, J = 8.1, 2.0 Hz, 1H), 4.19 (dd, J = 11.5, 3.7 Hz, 1H), 4.00 (dd, J = 11.5, 5.5 Hz, 1 H), 3.85 (s, 3 H), 3.36 (m, 1H), 2.86 (dd, J = 5.0, 4.1 Hz, 1H), 2.71 (dd, J= 5.0, 2.5 Hz, 1H), 2.51 (t, J = 7.4 Hz, 2H), 1.61 (m, 2H), 0.93 (t, J = 7.4 Hz, 3H).

### Example 2: Preparation of Epoxydized Eugenol monomer (EE)

1.0 equivalent of eugenol (from Sigma Aldrich) was charged into a round-bottomed flask. 0.1 equivalent of Triethylbenzylammonium chloride (TEBAC, from Sigma Aldrich) and 1.5 equivalent of Epichlorohydrin (from Sigma Aldrich) were added and the mixture was stirred for 3 hours at 90 °C. The solution was cooled down to room temperature and excess amount of epichlorohydrin was evaporated at 55 °C under reduced pressure. An aqueous solution of NaOH (1.1 eq., 15 wt%) was added and the mixture was vigorously hand-shaken and stirred for 30 minutes at 30 °C. Ethyl acetate and deionized water were then added. The mixture was extracted thrice with ethyl acetate. Organic layers were combined, rinsed thrice with brine and dried on anhydrous Na₂SO₄. Ethyl acetate was removed using a rotary evaporator. Chromatographic column on silica gel with a mixture of cyclohexane/ethyl acetate (95/5 to 9/1) gave EE as a white crystalline product (purity by ¹H NMR of 99%).

¹H NMR (400 MHz, CDCl₃) δ 6.84 (d, J = 8.0 Hz, 1H), 6.70 (d, J = 9.7 Hz, 2H), 5.95 (dd, J = 16.9, 10.1 Hz, 1H), 4.99-5.15 (m, 2H), 4.21 (dd, J = 11.4, 3.5 Hz, 1H), 4.02 (dd, J = 11.4, 5.5 Hz, 1 H), 3.85 (s, 3 H), 3.35-3.42 (m, 1H), 3.33 (dd, J = 11.4, 3.5 Hz, 1H), 2.84-2.91 (m, 1H), 2.72 (dd, J = 4.9, 2.6 Hz, 1H).

### Example 3: Synthesis of polyoxypropylene (P-1)

A polyoxypropylene triol having a number-average molecular weight of about 3,000 was used as an initiator to polymerize propylene oxide in the presence of a zinc hexacyanocobaltate glyme complex catalyst to yield a polyoxypropylene (P-1) having, at three terminals thereof, hydroxyl groups, respectively, and having a number-average molecular weight of 26,200.

### Example 4: Synthesis of silyl terminated polyether (A-1)

To 100wt% of the hydroxy-group-terminated polyoxypropylene (P-1) yielded according to Example 3 was added a 28% solution of sodium methoxide in an 1.0 equivalents relative to the amount of the hydroxyl group. Methanol was distilled off by vacuum devolatilization, and then 3wt% of EPG was added to the polymer (P-1) to conduct a reaction at 130°C for 4 hours. Thereafter, thereto was added a solution of sodium methoxide in methanol in an amount of 0.28 equivalent by mole and methanol was removed. Furthermore, thereto was added 3-chloro-1-propene in an amount of 1.8 equivalents by mole to convert the hydroxy groups at the terminals to allyl groups. An unreacted fraction of the allyl chloride was removed by vacuum devolatilization. Into 100 parts by weight of the resultant crude allyl-group-terminated polyoxyalkylene were incorporated 300 parts by weight of n-hexane and 300 parts by weight of water, and the mixture was stirred. The reaction system was then centrifuged to remove water. Into the resultant hexane solution were further incorporated 300 parts by weight of water, and the mixture was stirred. The reaction system was again centrifuged to remove water, and then hexane was removed by vacuum devolatilization. The process gave a polyoxyalkylene (Q-1) having carbon-carbon unsaturated bonds at terminal. To 500g of the polymer (Q-1), was added 50 µl of platinum divinyldisiloxane complex solution (a solution of platinum in 2-propanol which had a platinum-converted concentration of 3% by weight). While this system was stirred, 6.5g of dimethoxymethylsilane was dropwise and slowly added thereto. The resultant mixed solution was caused to undergo a reaction at 90°C for 2 hours, and then an unreacted fraction of dimethoxymethylsilane was distilled off under a reduced pressure to yield a reactive-silicon-group containing polyoxyalkylene (A-1) having a or each terminal moiety having one dimethoxysilyl group. It was understood that the polymer (A-1) had a dimethoxymethylsilyl group that was 0.8 in number on average per terminal of the polymer, and had dimethoxysilyl groups that were 2.3 in number on average per molecule of the polymer.

### Example 5: Synthesis of silyl terminated polyether (A-2)

To 100wt% of the hydroxy-group-terminated polyoxypropylene (P-1) yielded according to Example 3 was added a 28% solution of sodium methoxide in an 1.0 equivalents relative to the amount of the hydroxyl group. Methanol was distilled off by vacuum devolatilization, and then 12wt% of EPG was added to the polymer (P-1) to conduct a reaction at 130°C for 4 hours. Thereafter, thereto was added a solution of sodium methoxide in methanol in an amount of 0.28 equivalent by mole and methanol was removed. Furthermore, thereto was added 3-chloro-1-propene in an amount of 1.8 equivalents by mole to convert the hydroxy groups at the terminals to allyl groups. An unreacted fraction of the allyl chloride was romoved by vacuum devolatilization. Into 100 parts by weight of the resultant crude allyl-group-terminated polyoxyalkylene were incorporated 300 parts by weight of n-hexane and 300 parts by weight of water, and the mixture was stirred. The reaction system was then centrifuged to remove water. Into the resultant hexane solution were further incorporated 300 parts by weight of water, and the mixture was stirred. The reaction system was again centrifuged to remove water, and then hexane was removed by vacuum devolatilization.

The process gave a polyoxyalkylene (Q-2) having carbon-carbon unsaturated bonds at terminal. To 500g of the polymer (Q-2), was added 50 µl of platinum divinyldisiloxane complex solution (a solution of platinum in 2-propanol which had a platinum-converted concentration of 3% by weight). While this system was stirred, 6.5g of dimethoxymethylsilane was dropwise and slowly added thereto. The resultant mixed solution was caused to undergo a reaction at 90°C for 2 hours, and then an unreacted fraction of dimethoxymethylsilane was distilled off under a reduced pressure to yield a reactive-silicon-group containing polyoxyalkylene (A-2) having a or each terminal moiety having one dimethoxysilyl group. It was understood that the polymer (A-2) had a dimethoxymethylsilyl group that was 0.8 in number on average per terminal of the polymer, and had dimethoxysilyl groups that were 2.3 in number on average per molecule of the polymer.

### Example 6: Synthesis of silyl terminated polyether (A-3)

To 100wt% of the hydroxy-group-terminated polyoxypropylene (P-1) yielded according to Example 3 was added a 28% solution of sodium methoxide in an 1.0 equivalents relative to the amount of the hydroxyl group. Methanol was distilled off by vacuum devolatilization, and then 12wt% of EE was added to the polymer (P-1) to conduct a reaction at 130°C for 4 hours. Thereafter, thereto was added a solution of sodium methoxide in methanol in an amount of 0.28 equivalent by mole and methanol was removed. Furthermore, thereto was added 3-chloro-1-propene in an amount of 1.8 equivalents by mole to convert the hydroxy groups at the terminals to allyl groups. An unreacted fraction of the allyl chloride was removed by vacuum devolatilization. Into 100 parts by weight of the resultant crude allyl-group-terminated polyoxyalkylene were incorporated 300 parts by weight of n-hexane and 300 parts by weight of water, and the mixture was stirred. The reaction system was then centrifuged to remove water. Into the resultant hexane solution were further incorporated 300 parts by weight of water, and the mixture was stirred. The reaction system was again centrifuged to remove water, and then hexane was removed by vacuum devolatilization. The process gave a polyoxyalkylene (Q-3) having carbon-carbon unsaturated bonds at terminal. To 500g of the polymer (Q-3), was added 50 µl of platinum divinyldisiloxane complex solution (a solution of platinum in 2-propanol which had a platinum-converted concentration of 3% by weight). While this system was stirred, 25g of dimethoxymethylsilane was dropwise and slowly added thereto. The resultant mixed solution was caused to undergo a reaction at 90°C for 2 hours, and then an unreacted fraction of dimethoxymethylsilane was distilled off under a reduced pressure to yield a reactive-silicon-group containing polyoxyalkylene (A-3) having a or each terminal moiety having one dimethoxysilyl group. It was understood that the polymer (A-3) had a dimethoxymethylsilyl group that was 3.0 in number on average per terminal of the polymer, and had dimethoxysilyl groups that were 9.0 in number on average per molecule of the polymer.

### Example 7: Synthesis of Comparative silyl terminated polyether (B-1)

To 100wt% of the hydroxy-group-terminated polyoxypropylene (P-1) yielded according to Example 3 was added a 28% solution of sodium methoxide in an 1.2 equivalents relative to the amount of the hydroxyl group. Methanol was distilled off by vacuum devolatilization, and then 3-chloro-1-propene was added in an amount of 1.8 equivalents by mole to convert the hydroxy groups at the terminals to allyl groups. An unreacted fraction of the allyl chloride was removed by vacuum devolatilization. Into 100 parts by weight of the resultant crude allyl-group-terminated polyoxypropylene were incorporated 300 parts by weight of n-hexane and 300 parts by weight of water, and the mixture was stirred. The reaction system was then centrifuged to remove water. Into the resultant hexane solution were further incorporated 300 parts by weight of water, and the mixture was stirred. The reaction system was again centrifuged to remove water, and then hexane was removed by vacuum devolatilization. The process gave a polyoxypropylene (Q-1') having carbon-carbon unsaturated bonds at terminal. To 500g of the polymer (Q-1'), was added 50 µl of platinum divinyldisiloxane complex solution (a solution of platinum in 2-propanol which had a platinum-converted concentration of 3% by weight). While this system was stirred, 6.5g of dimethoxymethylsilane was dropwise and slowly added thereto. The resultant mixed solution was caused to undergo a reaction at 90°C for 2 hours, and then an unreacted fraction of dimethoxymethylsilane was distilled off under a reduced pressure to yield a reactive-silicon-group containing polyoxyalkylene (B-1) having a or each terminal moiety having one dimethoxysilyl group. It was understood that the polymer (B-1) had a dimethoxymethylsilyl group that was 0.8 in number on average per terminal of the polymer, and had dimethoxysilyl groups that were 2.3 in number on average per molecule of the polymer.

### Example 8: Preparation method of curable composition

Into 100 parts by weight of polymer (A-1), (A-2), (A-3) or (B-1) was incorporated 50 parts by weight of diisononyl phthalate (DINP, manufactured by ExxonMobil) as plasticizer, 120 parts by weight of precipitated calcium carbonate (HAKUENKA CCR, manufactured by Shiraishi Calcium Kaisha. Ltd.) as filler, 20 parts by weight of titanium oxide(Ti Pure, manufactured by Chemours) as pigment, 5 parts by weight of amide wax(CLAYVALLAC SLT, manufacturered by Claverley) as thixotropic agent, 1 parts by weight of Tinuvin 326 (manufactured by BASF) as UV stabilizer, 1 parts by weight of Irganox 245(manufactured by BASF) as antioxidant, and 1 parts by weight of Tinuvin 770 (manufactured by BASF) as light stabiliser. A three-roll machine was used to disperse components into an even (equilibrium) state. Thereafter, thereto were added 2 parts by weight of vinyltrimethoxysilane (Dynasilan VTMO, manufactured by Evonik) as moisture scavenger, 3 parts by weight of 3-aminopropyltrimethoxysilane (Dynasilan AMMO, manufactured by Evonik) as adhesion promotor, and 1.8 parts by weight of dioctyltin diketaboate (manufactured by TIBCHEMICALS) as catalyst, and all the components were sufficiently mixed with each other with a spatula. An autorotation/orbital-revolution mixer 5 was then used to mix the components with each other into an even state, and defoam the mixture.

### Example 9: Preparation method for formulated sheet

The curable composition of example 8 was used to fill a mold frame, and cured at 23°C and 50% RH for 3 days, and further cured at 50°C for 4 days to produce a sheet-form cured product having a thickness of about 3mm.

### Example 10: Testing of formulated sheets

### Tensile test method

Cured sheets were punched out into #3-dummbell form samples and these were subjected to a tensile strength test at 23°C and 50% RH to measure the stress at 50% elongation (M50), the tensile strength at break (TB), and the elongation at break (EB). The tensile strength was measured at a tensile rate of 200mm/min, with an autograph(AGS-J) manufactured by Shimadzu Corp.

### Tear strength method

Tear strength was measured according to the norm ISO-34-1 Method B.

### Handpeel

The curable formulation was painted into the form of beads onto a soft polyvinyl chloride substrate. The resultant was cured at 23°C and 50% RH in a thermostat for 7 days. The resultant bonding-test piece was used to check the state of the bonded surface when the bonded surface was broken in a 90-degree hand peel test. The proportion of cohesive failure is represented by C; and that of interfacial peeling, by A. The results are shown in Table 1.

**Table 1**

| | | Sample 1 | Sample 2 | Sample 3 | Comparative Sample 1 |
|---|---|---|---|---|---|
| Polymer | | A-1 | A-2 | A-3 | B-1 |
| Tensile strength | M50 (MPa) | 0.4 | 0.5 | 1.6 | 0.7 |
| | Tb (MPa) | 2.4 | 2.6 | 3.1 | 2.8 |
| | Eb (%) | 674 | 594 | 324 | 402 |
| Tear strength | kN/m | 14.4 | 14.9 | 12.5 | 12.7 |
| 90° Hand peel test | soft PVC | C100 | C100 | A100 | C10A90 |

These results show that silyl terminated polyethers of the present invention (Samples 1, 2 and 3) provide cured products having a higher tensile strength properties than silyl terminated polyethers of the prior art (Comparative Sample 1). In particular the silyl terminated polyethers having incorporated epoxidized eugenol monomers provide improved stress at 50% elongation and improved tensile strength at break whereas the silyl terminated polyethers having incorporated epoxidized guaiacol monomers show improved elongation at break and improved tear strength. The latter silyl terminated polyethers of the present invention also provide cured products having improved adhesion in particular to PVC substrates.

### Heat stability test

The heat stability of the cured products was determined by measuring the Shore A Hardness of the cured product initially (7days after the film was made at 23°C and 50%RH) and after several days after this initial measurement at 120°C according to ASTM D2240. The results are reported in Table 2 below.

**Table 2**

| | Sample 1 | Sample 2 | Sample 3 | Comparative Sample 1 |
|---|---|---|---|---|
| Polymer | A-1 | A-2 | A-3 | B-1 |
| Initial | 35 | 39 | 54 | 48 |
| After 7 days at 120°C | 33 | 37 | 50 | 48 |
| After 14 days at 120°C | 26 | 32 | 53 | 46 |
| After 21 days at 120°C | 16 | 31 | 55 | 31 |
| After 28 days at 120 °C | * | 28 | 55 | 20 |
| After 35 days at 120 °C | * | 20 | 57 | * |
| After 42 days at 120 °C | * | * | 48 | * |
| After 56 days at 120 °C | * | * | 33 | * |
| After 63 days at 120 °C | * | * | * | * |

| | | | | |
|---|---|---|---|---|
| * Impossible to measure | | | | |

These results show that the heat stability is substantially improved by incorporating epoxidized eugenol monomers into the polyether backbone of the silyl terminated polyether. Whereas the cured sheet based on the polymer (B-1) is not stable after 35 days, the cured sheet based on the polymer (A-3) remains stable until 56 days.

## Claims

1. Polyether having at least one reactive silyl group, preferably reactive terminal silyl group and having incorporated within its polyether backbone co-polymerised epoxidized o-, m-, or p-methoxyphenol monomers or derivatives thereof wherein the o-, m-, or p-methoxyphenol or derivative thereof is epoxidized prior to being incorporated into the polyether backbone.

2. Polyether according to claim 1 wherein the derivatives of epoxidized o-, m-, or p-methoxyphenol monomers are epoxidized, o-, m-, or p-methoxyphenol monomers substituted on the benzene ring with one or more substituents selected from the group consisting of alkyl groups or alkenyl groups, such groups preferably having 2 to 10 carbon atoms.

3. Polyether according to claim 1 or 2 wherein the epoxidized o-, m-, or p-methoxyphenol monomer or derivative thereof is epoxidized eugenol monomer, epoxidized guaiacol, or epoxidized propyl guaiacol.

4. Polyether according to any one of the preceding claims wherein the amount of epoxidized o-, m-, or p-methoxyphenol monomer or derivative thereof incorporated within the polyether backbone is at least 1 wt%, preferably between 2 and 50 wt%, most preferably between 3 and 30 wt% based on the total polymer.

5. Polyether according to any one of the preceding claims wherein the main chain of the polyether having at least one reactive silyl group is a polyoxypropylene chain.

6. Polyether according to any one of the preceding claims wherein the reactive silyl group is a silyl group containing at least one alkoxy group, preferably two or three alkoxy groups and is preferably selected from at least one of methyl dimethoxy silyl group, trimethoxy silyl group and triethoxy silyl group.

7. Process for preparing a polyether as defined in any one of the preceding claims comprising the steps of
(a) ring-opening polymerization reaction of a cyclic ether compound in the presence of an initiator using a polymerization catalyst to prepare a polyoxyalkylene polymer having terminal hydroxyl groups,
(b) converting the terminal hydroxyl groups of the compound obtained in step (a) to carbon-carbon unsaturated bonds, and
(c) hydrosilation of the compound obtained in step (b),
**characterized in that** the cyclic ether compound used in step (a) comprises epoxidized o-, m-, or p-methoxyphenol monomers.

8. Process according to claim 7 wherein the cyclic ether compound in step (a) further comprises propylene oxide.

9. Process according to claim 7 or 8 wherein the initiator compound in step (a) is a polyoxyalkylene polyol.

10. Curable composition comprising a polyether as defined in any one of claims 1 to 6 and further at least one additive preferably selected from the group consisting of catalysts, rheology control agents, pigments, anti-oxidants, UV and light stabilizers, adhesion promotors, plasticizers, moisture scvavengers and fillers.

11. Use of the polyether as defined in any one of claims 1 to 6 or the curable composition as defined in claim 10 in binder, coating, sealant or adhesive applications.

12. A cured product obtained by curing the curable composition as defined in claim 10.

13. Use of the cured product as defined in claim 12 as a binder, coating, sealant or adhesive.

## Patentansprüche

1. Polyether mit mindestens einer reaktiven Silylgruppe, vorzugsweise einer reaktiven terminalen Silylgruppe, und inkorporiert in sein Polyether-Grundgerüst, copolymerisierte, epoxidierte o-, m- oder p-Methoxyphenolmonomere oder Derivate davon, wobei das o-, m- oder p-Methoxyphenol oder ein Derivat davon vor der Einbindung in das Polyether-Backbone epoxidiert wird.

2. Polyether nach Anspruch 1, wobei die Derivate epoxidierter o-, m-oder p-Methoxyphenolmonomere epoxidierte o-, m- oder p-Methoxyphenolmonomere sind, die am Benzolring durch einen oder mehrere Substituenten, ausgewählt aus der Gruppe, bestehend aus Alkylgruppen oder Alkenylgruppen, substituiert sind, wobei solche Gruppen vorzugsweise 2 bis 10 Kohlenstoffatome haben.

3. Polyether nach Anspruch 1 oder 2, wobei das epoxidierte o-, m-oder p-Methoxyphenolmonomer oder ein Derivat davon epoxidiertes Eugenolmonomer, epoxidiertes Guaiacol oder epoxidiertes Propylguaiacol ist.

4. Polyether nach einem der vorhergehenden Ansprüche, wobei die Menge des epoxidierten o-, m- oder p-Methoxyphenolmonomers oder des Derivats davon, das in das Polyether-Grundgerüst integriert ist, mindestens 1 Gew.-%, vorzugsweise zwischen 2 und 50 Gew.-%, am bevorzugtesten zwischen 3 und 30 Gew.-%, basierend auf dem Gesamtpolymer, ist.

5. Polyether nach einem der vorhergehenden Ansprüche, wobei die Hauptkette des Polyethers mit mindestens einer reaktiven Silylgruppe eine Polyoxypropylenkette ist.

6. Polyether nach einem der vorhergehenden Ansprüche, wobei die reaktive Silylgruppe eine Silylgruppe enthaltend mindestens eine Alkoxygruppe ist, vorzugsweise zwei oder drei Alkoxygruppen, und vorzugsweise ausgewählt aus mindestens einer von Methyldimethoxysilylgruppe, Trimethoxysilylgruppe und Triethoxysilylgruppe.

7. Verfahren zum Herstellen eines Polyethers wie in einem der vorhergehenden Ansprüche definiert, umfassend die Schritte von:
(a) ringöffnende Polymerisationsreaktion einer zyklischen Etherverbindung in Gegenwart eines Initiators unter Verwendung eines Polymerisationskatalysators zur Herstellung eines Polyoxyalkylenpolymers mit terminalen Hydroxygruppen,
(b) Umwandeln der terminalen Hydroxygruppen der in Schritt (a) erhaltenen Verbindung in ungesättigte Kohlenstoff-Kohlenstoff-Bindungen, und
(c) Hydrosilierung der in Schritt (b) erhaltenen Verbindung, **dadurch gekennzeichnet, dass** die in Schritt (a) verwendete zyklische Etherverbindung epoxidierte o-, m- oder p-Methoxyphenolmonomere umfasst.

8. Verfahren nach Anspruch 7, wobei die zyklische Etherverbindung in Schritt (a) ferner Propylenoxid umfasst.

9. Verfahren nach Anspruch 7 oder 8, wobei die Initiatorverbindung in Schritt (a) ein Polyoxyalkylenpolyol ist.

10. Härtbare Zusammensetzung, umfassend ein Polyether wie in einem der Ansprüche 1 bis 6 definiert und ferner mindestens ein Additiv, vorzugsweise ausgewählt aus der Gruppe, bestehend aus Katalysatoren, rheologischen Steuerungsmitteln, Pigmenten, Antioxidantien, UV- und Lichtstabilisatoren, Adhäsionsbeschleunigern, Weichmachern, Feuchtigkeitsfängern und Füllstoffen.

11. Verwenden des Polyethers nach einem der Ansprüche 1 bis 6 oder der härtbaren Zusammensetzung nach Anspruch 10 in Bindemittel-, Beschichtungs-, Dichtmittel- oder Klebstoffanwendungen.

12. Gehärtetes Produkt, erhalten durch Härten der härtbaren Zusammensetzung wie in Anspruch 10 definiert.

13. Verwenden des gehärteten Produkts wie in Anspruch 12 definiert als Bindemittel, Beschichtung, Dichtmittel oder Klebstoff.

## Revendications

1. Polyéther ayant au moins un groupe silyle réactif, de préférence un groupe silyle terminal réactif, et ayant, incorporé à l'intérieur de sa charpente de polyéther, des monomères de o-, m- ou p-méthoxyphénol époxydés copolymérisés ou des dérivés de ceux-ci, dans lequel le o-, m- ou p-méthoxyphénol ou son dérivé est époxydé avant d'être incorporé dans la charpente de polyéther.

2. Polyéther selon la revendication 1, dans lequel les dérivés de monomères de o-, m- ou p-méthoxyphénol époxydés sont des monomères de o-, m- ou p-méthoxyphénol époxydés substitués sur le cycle benzène par un ou plusieurs substituants choisis dans l'ensemble constitué par les groupes alkyle et les groupes alcényle, ces groupes ayant de préférence 2 à 10 atomes de carbone.

3. Polyéther selon la revendication 1 ou 2, dans lequel le monomère de o-, m- ou p-méthoxyphénol époxydé ou son dérivé est un monomère d'eugénol époxydé, le guaiacol époxydé, ou le propylguaiacol époxydé.

4. Polyéther selon l'une quelconque des revendications précédentes, dans lequel la quantité de monomère de o-, m- ou p-méthoxyphénol époxydé ou de son dérivé incorporé à l'intérieur de la charpente de polyéther est d'au moins 1 % en poids, de préférence comprise entre 2 et 50 % en poids, tout spécialement comprise entre 3 et 30 % en poids, par rapport au polymère total.

5. Polyéther selon l'une quelconque des revendications précédentes, dans lequel la chaîne principale du polyéther ayant au moins un groupe silyle réactif est une chaîne de polyoxypropylène.

6. Polyéther selon l'une quelconque des revendications précédentes, dans lequel le groupe silyle réactif est un groupe silyle contenant au moins un groupe alcoxy, de préférence deux ou trois groupes alcoxy, et est de préférence au moins l'un choisi parmi un groupe méthyldiméthoxysilyle, un groupe triméthoxysilyle et un groupe triéthoxysilyle.

7. Procédé pour préparer un polyéther tel que défini dans l'une quelconque des revendications précédentes, comprenant les étapes de
(a) réaction de polymérisation par décyclisation d'un composé éther cyclique en présence d'un amorceur utilisant un catalyseur de polymérisation pour préparer un polymère de polyoxyalkylène ayant des groupes hydroxyle terminaux,
(b) conversion des groupes hydroxyle terminaux du composé obtenu dans l'étape (a) en liaisons carbone-carbone insaturées, et
(c) hydrosilylation du composé obtenu dans l'étape (b),
**caractérisé en ce que** le composé éther cyclique utilisé dans l'étape (a) comprend des monomères de o-, p- ou p-méthoxyphénol époxydés.

8. Procédé selon la revendication 7, dans lequel le composé éther cyclique dans l'étape (a) comprend en outre de l'oxyde de propylène.

9. Procédé selon la revendication 7 ou 8, dans lequel le composé amorceur dans l'étape (a) est un polyoxyalkylèneglycol.

10. Composition durcissable comprenant un polyéther tel que défini dans l'une quelconque des revendications 1 à 6 et en outre au moins un additif de préférence choisi dans l'ensemble constitué par les catalyseurs, les agents régulateurs de rhéologie, les pigments, les antioxydants, les stabilisants aux UV et à la lumière, les promoteurs d'adhérence, les plastifiants, les piégeurs d'humidité et les charges.

11. Utilisation du polyéther tel que défini dans l'une quelconque des revendications 1 à 6 ou de la composition durcissable telle que définie dans la revendication 10 dans des applications de liant, de revêtement, d'agent de scellement ou d'adhésif.

12. Produit durci obtenu par durcissement de la composition durcissable telle que définie dans la revendication 10.

13. Utilisation du produit durci tel que défini dans la revendication 12 en tant que liant, revêtement, agent de scellement ou adhésif.
